# EUROPEAN PATENT SPECIFICATION

(11) **EP 3 019 815 B1**
(45) Date of publication and mention of the grant of the patent: **15.08.2018**
(21) Application number: 14744191.9
(22) Date of filing: 01.07.2014
(51) Int. Cl.: F41H 5/013, F41H 5/20

(54) **TURRET STRUCTURE, IN PARTICULAR FOR A FIGHTING VEHICLE**
TURMSTRUKTUR, INSBESONDERE FÜR EIN KAMPFFAHRZEUG
STRUCTURE DE TOURELLE, EN PARTICULIER POUR UN VÉHICULE DE COMBAT

(30) Priority: 10.07.2013 IT TO20130580
(43) Date of publication of application: 18.05.2016
(73) Proprietor: LEONARDO S.P.A., 00195 Roma (IT)
(72) Inventor: ARRIGHI, Paolo, 19136 La Spezia (IT); MORONI, Lorenzo, 19136 La Spezia (IT)
(74) Representative: Vitillo, Giuseppe
(86) International application number: PCT/IB2014/062753
(87) International publication number: WO 2015/004568

(56) References cited:
- EP-A1- 0 122 187
- EP-A1- 1 605 223
- WO-A1-2010/150197
- FR-A- 787 650
- VALPOLINI P: "TURRETS ON A LEASH", ARMADA INTERNATIONAL, ARMADA INTERNATIONAL, ZURICH, CH, vol. 36, no. 6, 1 December 2012 (2012-12-01), pages 6-13, XP001579941, ISSN: 0252-9793

## Description

### Technical field

The present invention relates to a turret, in particular for a fighting vehicle.

### Technological background

In the technical field turrets are known, i.e. systems that are generally adapted for supporting a firearm and are able to protect the men on board or the mechanism that allows the projectile associated with the firearm to be shot, allowing at the same time the firearm to be aimed and to shoot in different directions.

Turrets are typically designed to be installed not only on buildings or fixed structures, but also on mobile structures, such as military aircraft, fighting vehicles, etc.

In the art are known some devices as described in their respective documents. For example, EP 0122187 A1 discloses a turret for an armoured vehicle, the turret comprising a turret body that has, seen from the side, the shape of two trapezes joined by their long bases, its side walls consisting of inclined panels assembled to form protruding edge dihedrons. However, turrets manufactured according to the prior art suffer from some drawbacks.

### Summary of the invention

An object of the present invention is to provide a turret, which is able to solve the drawbacks of the prior art and which, at the same time, can be produced in a simple and economic fashion. In particular, an object of the present invention is to provide a turret provided with an improved casing, which is adapted for ensuring a particularly effective ballistic protection.

According to the present invention, this and other objects are reached by means of a turret of the type described above and defined in the characterizing portion of the appended independent claim.

The appended claims are an integral part of the technical teaching provided in the following detailed description concerning the present invention. In particular, the appended dependent claims define some preferred embodiments of the present invention and describe optional technical features.

### Brief description of the drawings

Further features and advantages of the present invention will be best understood upon perusal of the following detailed description, which is provided by way of example and is not limiting, with reference, in particular, to the accompanying drawings, wherein:
- figures from 1 to 3 are bidimensional views, in particular a lateral elevation view, a front elevation view, and a plan view from above, respectively, of a turret for vehicles manufactured according to an explanatory embodiment of the present invention;
- figures 4 and 5 are bidimensional views, in particular a front elevation view and a lateral elevation view, respectively, of a front portion or shell of the turret shown in the previous figures;
- figures from 6 to 8 are enlarged views, in partial cutaway drawings, of manufacturing details shown in figure 4 and highlighted therein with the closed curves VI, VII and VIII;
- figure 9 is a perspective view of a rear portion or tail of the turret shown in figures from 1 to 3;
- figures 10 and 11 are bidimensional views, in particular a front elevation view and a lateral elevation view, respectively, of the rear portion or tail shown in figure 9; and
- figure 12 is an enlarged view, in partial cutaway drawing, of manufacturing details shown in figure 10 and highlighted therein with the closed curve XII.

### Detailed description of the invention

With reference to the accompanying drawings, number 10 indicates, as a whole, a turret, in particular for a fighting vehicle, manufactured according to an explanatory embodiment of the present invention.

In particular, turret 10 is designed to be mounted on top of a fighting vehicle, for example on a tank (not shown). More in detail, turret 10 is mounted so as to rotate relative to the fighting vehicle, so that it is able to rotate around a substantially vertical axis, moving on a substantially horizontal plane.

Though, in further embodiments, turret 10 can be mounted not only on a fighting vehicle, but also on buildings and fixed structures, as well as on mobile structures, for example military aircraft.

Turret 10 has a hollow casing 12, which is provided with a firearm, such as a cannon 14. In the embodiment shown, cannon 14 projects towards the outside of hollow casing 12 and is supported by the latter during its rotation around a substantially horizontal axis

As described more in detail below, hollow casing 12 is provided, on the outside, with an armor, which is designed to protect the hollow casing itself from the impact and the explosion of the ammunitions coming from enemy weapons.

In particular, hollow casing 12 has a substantially box-like shape and, in the embodiment shown, it comprises a plurality of sheet metal pieces, which are assembled with one another as described more in detail below. In particular, the sheet metal pieces are coated with a plurality of armor panels.

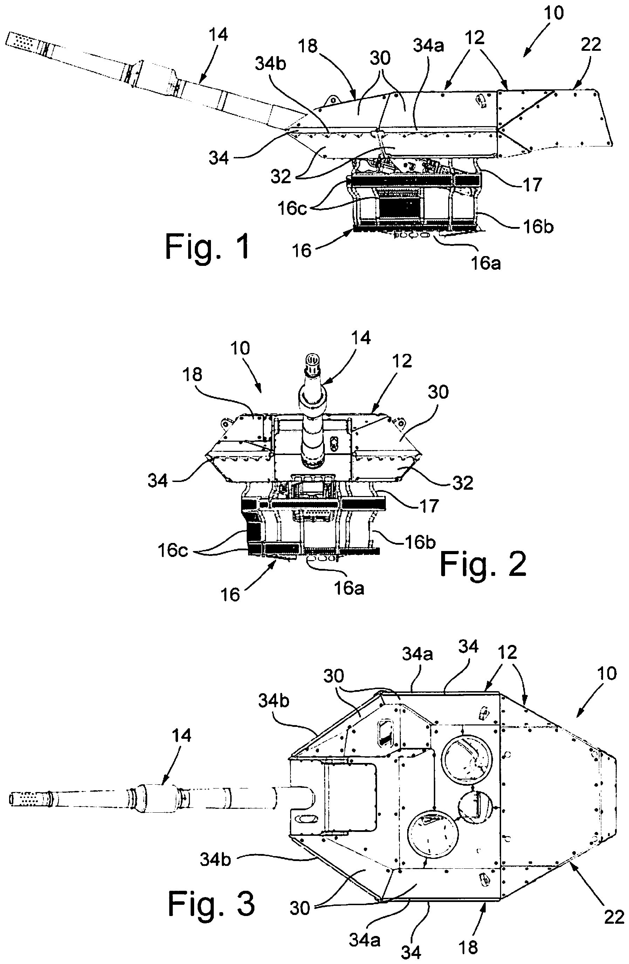

Furthermore, turret 10 comprises a basket 16, only partially visible in figures 1 and 2, which extends through a bottom opening (not numbered) provided on the lower side of hollow casing 12 and is adapted to house the crew of the vehicle on which the turret is mounted.

In particular, turret 10 is fitted to the fighting vehicle in correspondence to the bottom of casing 12, typically by interposing a rotation support (e.g. bearings) between the structure of the vehicle and the bottom of casing 12.

In the embodiment shown, basket 16 comprises a base 16a and a plurality of uprights 16b, which preferably have a tubular shape and join the base to hollow casing 12. In particular, ballistic grids or plates 16c are transversely mounted between segments of the uprights 16b and are adapted to provide a protection for the compartment defined by basket 16.

Optionally, the uprights 16b, by bending or curving outwards, form a cove 17, which is arranged close to their top, so as to the increase the volume enclosed in basket 16 close to hollow casing 12. In this way, one can advantageously increase the usable space in the region at the boundary between the inside of hollow body 12 and casing 16, which typically is a critical area, since it is suited to house the seats (not visible) on which the operators making up the crew of the turret seat.

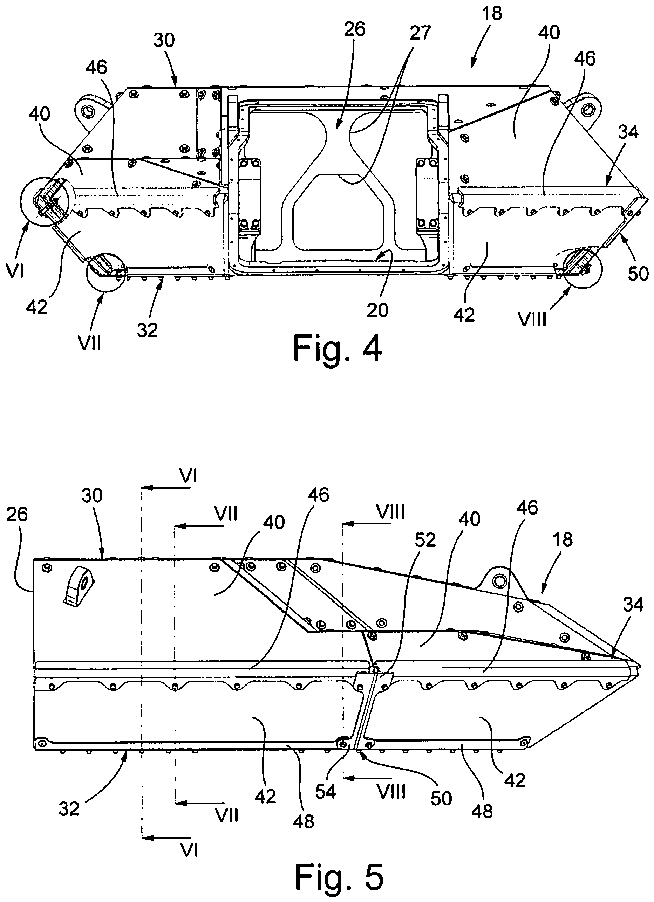

Hollow casing 12 comprises:
- a front portion or shell 18, on which firearm 14 is mounted and which defines a front cavity 20 (see figure 4); and
- a rear portion or tail 22, which houses at least one between a projectile magazine and a (motor-driven or manual) mechanism to load the projectiles (not shown) into the breech of said firearm 14 and which defines a rear cavity 24.

Front portion or shell 18 and rear portion or tail 22 are distinct from one another and are mutually mechanically assembled so that aforesaid cavities 20, 24 at least partially communicate with one another.

The presence of a front portion or shell 18 and of a rear portion or tail 22, which are separate from one another and subsequently assembled, has different advantages. For example, an advantage lies on the fact that the manufacturing processes of casing 12 can be separated, so that front portion or shell 18 is processed in a separate and independent manner relative to rear portion or tail 22. In particular, this allows operators to use smaller machines for the processing of the two portions 18, 22 compared to the machine that would otherwise be necessary for a casing substantially consisting of a one-piece shell, for example manufactured by welding the sheet metal pieces making it up. Furthermore, the assembly and the preparation of front portion or shell 18 (with the firearm) and of rear portion or tail 22 (with at least one between the the projectile magazine and the projectile loading mechanism) can take place in parallel, in order to then join the portions at the end of the relative assembling processes, thus remarkably reducing the overall manufacturing time.

The fact that, once assembled, cavities 20, 24 communicate with one another allows the projectiles stored in the magazine and/or introduced into the loading mechanism arranged in rear portion or tail 22 to be transferred to the breech of firearm 14 arranged in front portion or shell 18, preferably with the control and aid of the operators of the crew accommodated in basket 16.

Preferably, front portion or shell 18 and rear portion or tail 22 are mounted in a mutually removable manner, for example they can be connected to a plurality of screws designed to be removed when the two portion 18, 22 have to be disassembled. For example, this circumstance can be due to the need for maintenance or replacement of one of the two portions 18, 22. The possibility to disassemble the portions 18, 22 makes it easier for them to be moved and more quickly repaired or replaced, since they are separate from one another.

In the embodiment show, front portion or shell 18 and rear portion or tail 22 have a rear face 26 and a front face 28, respectively, which substantially match one another, are mutually juxtaposed and abutting, and are mechanically coupled to one another. Preferably, this coupling takes place by means of a removable connection between faces 26, 28 (for example, by means of screws that can be removed in case of need).

Preferably, rear face 26 and front face 28 are substantially flat and, in particular, are arranged on a substantially vertical plane.

In particular, rear face 26 and front face 28 have at least one rear window 27 and one front window 29, respectively, which match one another and are suited to overlap one another.

In the embodiment shown, front portion or shell 18 has the bottom opening and basket 16 is fitted thereto.

Furthermore, the bottom of front portion or shell 18 is suited to be mounted so as to rotate on top of the fixed or mobile structure on which turret 10 is suited to be installed, in this case a fighting vehicle. In particular, the assembly is performed by interposing a suitable rotation support between the structure and the bottom of the front portion or shell 18 (around the region in which basket 16 is mounted), for example bearings. Casing 12 has an upper half-shell 30 at least partially widening towards the bottom of said casing 12 (hence, tapered towards the top), and a lower half-shell 32 at least partially widening towards the top of casing 12 (hence, tapered towards the bottom). Upper half-shell 30 and lower half-shell 32 meeting, widening, in at least one edge border 34 of casing 12. Thanks to these features, upper half-shell 30 and lower half-shell 32 obtained in this way have, on the one hand, a scarce radar perceivability (so-called "stealth effect") and, on the other hand, the ballistic ability of bouncing incident projectiles towards the outside.

Preferably, the aforesaid half-shells 30, 32 define, by widening and meeting, at least one lateral edge border 34a, which is laterally arranged on casing 12, in particular on front portion or shell 18. In the embodiment shown, half-shells 30, 32 define a pair of lateral edge borders 34a, which are arranged on opposite sides of the casing, in particular on front portion or shell 18. For example, this couple of lateral edge borders 34a are substantially parallel to one another.

Preferably, the aforesaid half-shells 30, 32 define, by widening, at least one front edge border 34b, which is frontally arranged on casing 12, in particular on front portion or shell 18. In the embodiment shown, half-shells 30, 32 define a pair of front edge borders 34b, in particular on front portion or shell 18. For example, these front edge borders 34b frontally converge relative to casing 12, in particular relative to front portion or shell 18.

In particular edge borders 34 are arranged in correspondence to at least part of the perimeter of casing 12 (and, in particular, of front portion or shell 18) and, more in particular, in correspondence to the lateral profiles or lateral sides that join in a part of the front profile that is frontally tapered to house firearm 14.

As a person skilled in the art clearly understands, even though in the embodiment shown edge borders 34 are carried only by front part or shell 18, in possible variants of the invention they can also be applied to rear portion or tail 22.

With reference, in particular, to the figures from 6 to 8, the structure of edge borders 34 can also permit an improved fitting of an armor onto casing 12, in particular in correspondence to half-shells 30, 32.

As shown in the figures from 6 to 8, upper half-shell 30 and lower half-shell 32 are joined in correspondence to each edge border 34 by means of at least one upper inclined sheet metal piece 36 and one lower inclined sheet metal piece 38, respectively. For example, upper inclined sheet metal piece 36 and lower inclined sheet metal piece 38 can be welded to one another in correspondence to edge border 34.

In particular, in each region where an edge border 34 is provided, upper half-shell 30 and lower half-shell 32 have, on the outside, an upper armored panel 40 and a lower armored panel 42, in the embodiment shown arranged above inclined sheet metal pieces 36, 38. Panels 40, 42 are adjacent and peripherally in contact with one another, in particular in correspondence to edge border 34.

In correspondence to each edge border 34, casing 12 comprises, furthermore, a supporting element 46, which matches and covers the area where panels 40, 42 are adjacent to one another. More in detail, supporting element 46 is oblong (for example, extends along the entire length of adjacent panels 40, 42 in correspondence to edge border 34) and has a concavity facing the area where panels 40, 42 are adjacent to and in contact with one another. In particular, supporting element 46 has a substantially V-shaped section. Supporting element 46 is constrained to said casing 12 (lower half-shell 30) by means of through members 47, for example by means of a plurality of screws, which extend through lower panel 42 and, in particular, are aligned under edge border 34. This constraint is able to allow supporting element 46 to ensure the stability of the support of adjacent panels 40, 42. In fact, the invention avoids, for this reason, a coupling of supporting element 46 to casing 12 (upper half-shell 32) by means of members extending through upper panel 40.

This situation has the significant advantage of offering the possibility to reduce the number of points in which panels 40, 42 are perforated, since, in this way, weakening areas of the panels are created in an undesired manner. Furthermore, the decision of perforating the sole lower panel 42 for the fitting of the supporting element is advantageous due to the fact that the potentially weakened areas of the armor of casing 12 are arranged in a position that is difficult to reach for a projectile that is aimed at turret 10.

In the embodiment shown, through members 47 extend through lower panel 42 and lower sheet metal piece 38, which are arranged one on top of the other, to obtain the fitting of supporting element 46.

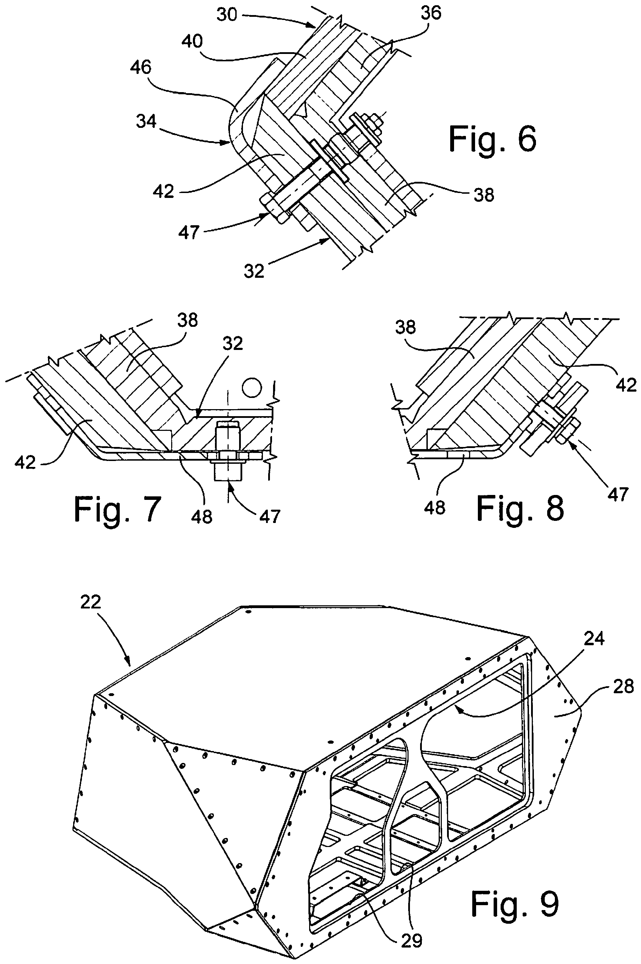

Preferably, base fixing elements 48 are also provided, which are similar to supporting elements 46 described above with reference to the area where edge border 34 is provided. Base fixing elements 48 match and cover the adjacent surfaces of lower armored panel 42 and the bottom of lower half-shell 32. In the case shown in figure 7, through members 47, which allow each base fixing element 48 to be coupled to casing 12, extend through the bottom of lower half-shell 32, in particular without passing through lower armored plate 42. On the contrary, in the case shown in figure 8, through members 47 extend through lower armored plate 42, in a transverse direction.

Furthermore, fixing uprights 50 are optionally provided, in particular of the plate-like type, each one of them being suited to connect supporting element 46 to base fixing element 48 associated with the same lower panel 42. Preferably, each one of them is also suited to connect pairs of mutually adjacent supporting elements 46 and/or pairs of mutually adjacent base fixing elements 48, thus also constraining to one another, in particular, the adjacent lower panels 42.

In this way, in particular, fixing uprights 50 overlap the areas in which lower panels 42 are adjacent to one another, so as to avoid empty spaces in the armor built by panels 40, 42.

Preferably, each fixing upright 50, at the same axial end 52, connects to adjacent supporting elements 46, for example, by being passed through by the same through members that extend through supporting elements 46 and lower armored panel 42. In this way, in order to fit fixing uprights 50, operators do not need to drill further holes through lower armored panel 42, besides the ones that are already needed for the installation of supporting elements 46. The same also applies to opposite axial end 54 of fixing upright 50, with the difference that it connects base fixing elements 48 that are adjacent to one another.

In the embodiment shown, each fixing element 50 has ends 52, 54, that are wider then the rest of the upright, in particular creating the shape of a "dog bone".

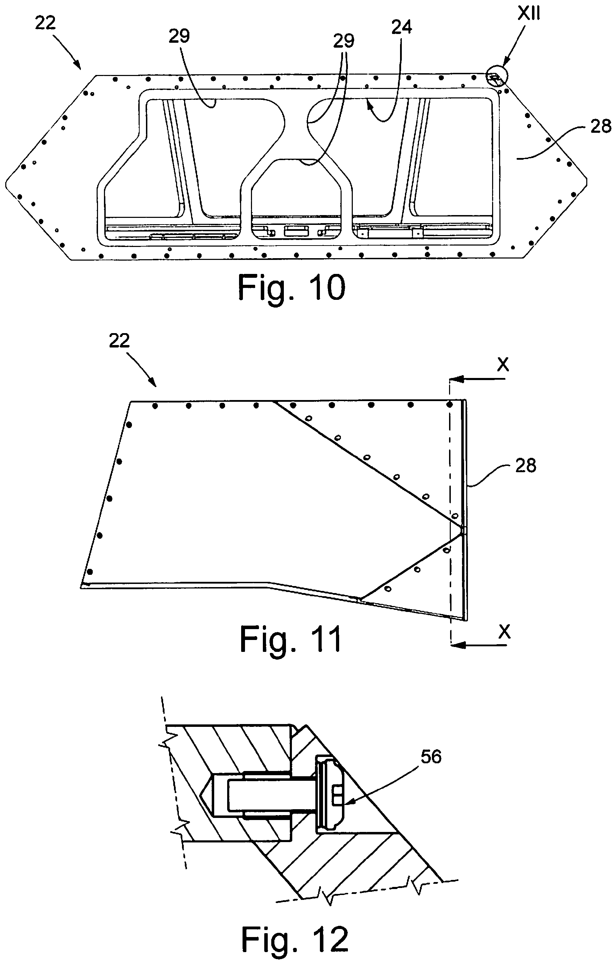

Figure 12 shows a detail of rear portion or tail 22 of casing 12. Preferably, rear portion or tail 22 is manufactured with a plurality of sheet metal pieces, which are cold-assembled with one another, for example screwed to one another, in particular without performing hot-assembling procedures, such as welding procedures. The mechanical connection between adjacent areas of the sheet metal pieces fixed together is performed by means of ballistic interlocking means, generically indicated with 56, which are known for casings manufactured by means of welding. This reduces manufacturing costs and times and makes repairs easier to be performed.

In the embodiment shown, front portion or shell 18 is manufactured by welding a plurality of sheet metal pieces 36, 38, on which armored panels (40, 42) are mechanically heat-free mounted, in particular by means of the use of screws (preferably, in accordance with the solution described above).

## Claims

1. Turret, in particular for a fighting vehicle; said turret comprising a hollow casing (12) provided with a firearm, such as a cannon (14), said casing (12) comprising:
- an upper half-shell (30) at least partially widening towards the bottom of said casing (12), and
- a lower half-shell (32) at least partially widening towards the top of said casing (12);
said upper half-shell (30) and said lower half-shell (32) meeting, widening, in at least one edge border (34) of the casing (12); **characterized in that**:
in the area where said at least one edge border (34) is arranged, said upper half-shell (30) has, on the outside, at least one upper armored panel (40) and the lower half-shell has, on the outside, at least one lower armored panel (42); said armored panels being adjacent and peripherally in contact with one another; said casing (12) further comprising:
- a supporting element (46), located in the area where said at least one edge border (34) is arranged, which matches and covers the area where the panels (40, 42) are adjacent to one another, for ensuring stability of the support of the panels (40, 42); the supporting element (46) being constrained to said casing (12) by means of through organs (47) which extend through said lower panel (42);
- at least one base fixing element (48), which matches and covers the adjacent surfaces of said lower armored panel (42) and the bottom of the lower half-shell (32);

2. Turret according to claim 1, further comprising at least one connecting upright (50) which overlaps and connects the supporting element (46) to the base fixing element (48) associated with the same lower panel (42).

3. Turret according to claim 1 or 2, wherein said half-shells (30, 32) define, by meeting and widening, at least one lateral edge border (34a), which is arranged on the side of said casing (12).

4. Turret according to any of the previous claims, wherein said half-shells (30, 32) define, by meeting and widening, at least one front edge border (34b), which is arranged on the front of said casing (12).

5. Turret according to any claims 2-4, wherein said at least one connecting upright (50) overlaps and connects a pair of mutually adjacent supporting elements (46) and/or a pair of mutually adjacent base fixing elements (48).

## Patentansprüche

1. Geschützturm, insbesondere für ein Kampffahrzeug, wobei der Geschützturm ein hohles Gehäuse (12) aufweist, das mit einer Feuerwaffe wie eine Kanone (14) versehen ist, wobei das Gehäuse (12) aufweist:
- eine obere Halbschale (30), die sich zumindest teilweise zum Boden des Gehäuses (12) hin verbreitert, und
- eine untere Halbschale (32), die sich zumindest teilweise zur Oberseite des Gehäuses (12) hin verbreitert;
wobei die obere Halbschale (30) und die untere Halbschale (32) mindestens an einem Kantenrand (34) des Gehäuses (12) breiter werdend aufeinandertreffen;
**dadurch gekennzeichnet, dass**:
die obere Halbschale (30) in dem Bereich, in dem der mindestens ein Kantenrand (34) angeordnet ist, auf der Außenseite mindestens eine obere Panzerplatte (40) aufweist, und die untere Halbschale (32) auf der Außenseite mindestens eine untere Panzerplatte (42) aufweist;
wobei die Panzerplatten benachbart sind und an der Außenfläche in Kontakt miteinander sind;
wobei das Gehäuse (12) ferner aufweist:
- ein Befestigungselement (46), das in dem Bereich liegt, in dem der wenigstens eine Kantenrand (34) angeordnet ist, und das an den Bereich angepasst ist, wo die Panzerplatten (40, 42) nebeneinanderliegen und diesen abdeckt, um die Stabilität der Befestigungen der Panzerplatten (40, 42) zu gewährleisten;
wobei das Befestigungselement (46) mittels Durchgangselementen (47), die sich durch die untere Platte (42) erstrecken, an dem Gehäuse (12) befestigt ist (34);
- mindestens ein Basisbefestigungselement (48), das an die benachbarten Oberflächen der unteren Panzerplatten (42) und den Boden der unteren Halbschale (32) angepasst ist und die Oberflächen abdeckt.

2. Geschützturm nach Anspruch 1, der mindestens ein Befestigungsholm (50) aufweist, der das Befestigungselement (46), das der gleichen unteren Platte (42) zugeordnet ist, und das Basisbefestigungselement (48) überlappt und diese verbindet.

3. Geschützturm nach Anspruch 1 oder 2, bei dem die Halbschalen (30, 32) durch Zusammentreffen und Sich-Verbreitern mindestens einen seitlichen Kantenrand (34a) definieren, der auf der Seite des Gehäuses (12) angeordnet ist.

4. Geschützturm nach einem der vorhergehenden Ansprüche, bei dem die Halbschalen (30, 32) durch Zusammentreffen und Sich-Verbreitern mindestens einen vorderen Kantenrand (34b) definieren, der an der Vorderseite des Gehäuses (12) angeordnet ist.

5. Geschützturm nach einem der Ansprüche 2-4, wobei der wenigstens eine Befestigungsholm (50) ein Paar von zueinander benachbarten Befestigungselementen (46) und / oder ein Paar von zueinander benachbarten Basisbefestigungselementen (48) überlappt und verbindet.

## Revendications

1. Tourelle, en particulier pour un véhicule de combat ; ladite tourelle comprenant un corps creux (12) équipé d'une arme à feu, telle qu'un canon (14), ledit corps (12) comprenant :
- une demi-coque supérieure (30) s'élargissant au moins partiellement vers le bas dudit corps (12), et
- une demi-coque inférieure (32) s'élargissant au moins partiellement vers le haut dudit corps (12) ;
ladite demi-coque supérieure (30) et ladite demi-coque inférieure (32) se rejoignant, en s'élargissant, en au moins un bord d'arête (34) du corps (12) ;
**caractérisée en ce que** :
dans la zone où est agencé ledit au moins un bord d'arête (34), ladite demi-coque supérieure (30) comporte, sur l'extérieur, au moins un panneau armé supérieur (40) et la demi-coque inférieure comporte, sur l'extérieur, au moins un panneau armé inférieur (42) ;
lesdits panneaux armés étant adjacents et en contact périphérique entre eux ;
ledit corps (12) comprenant en outre :
- un élément de support (46), situé dans la zone où est agencé ledit au moins un bord d'arête (34), qui correspond et recouvre la zone où les panneaux (40, 42) sont adjacents l'un à l'autre, pour garantir la stabilité du support des panneaux (40, 42) ; l'élément de support (46) étant contraint sur ledit corps (12) au moyen d'organes traversants (47) qui s'étendent à travers ledit panneau inférieur (42) ;
- au moins un élément de fixation de base (48), qui correspond et recouvre les surfaces adjacentes dudit panneau armé inférieur (42) et le bas de la demi-coque inférieure (32).

2. Tourelle selon la revendication 1, comprenant en outre au moins un montant de liaison (50) qui chevauche et relie l'élément de support (46) à l'élément de fixation de base (48) associé au même panneau inférieur (42).

3. Tourelle selon la revendication 1 ou 2, dans laquelle lesdites demi-coques (30, 32) définissent, en se rejoignant et s'élargissant, au moins un bord d'arête latéral (34a), qui est agencé sur le côté dudit corps (12).

4. Tourelle selon l'une quelconque des revendications précédentes, dans laquelle lesdites demi-coques (30, 32) définissent, en se rejoignant et s'élargissant, au moins un bord d'arête avant (34b), qui est agencé sur l'avant dudit corps (12).

5. Tourelle selon l'une quelconque des revendications 2-4, dans laquelle ledit au moins un montant de liaison (50) chevauche et relie une paire d'éléments de support mutuellement adjacents (46) et/ou une paire d'éléments de fixation de base mutuellement adjacents (48).
